# EUROPÄISCHE PATENTANMELDUNG

(11) **EP 3 552 791 A1**
(43) Veröffentlichungstag der Anmeldung: **16.10.2019**
(21) Anmeldenummer: 19167232.8
(22) Anmeldetag: 04.04.2019
(51) Int. Cl.: B29C 45/00, B65D 1/26, B65D 43/02, B65D 51/22, C08J 3/20, C08L 99/00, B32B 15/08, C08K 11/00

(54) **VERBUNDWERKSTOFF**

(30) Priorität: 09.04.2018 AT 952018
(71) Anmelder: Swiss Prime Pack AG, 9450 Altstätten (CH)
(72) Erfinder: Schwendemann, Daniel Josef, 88630 Pfullendorf (DE); Wick, Beat, 9200 Gossau (CH); Ramsauer, Alex, 8645 Jona (CH)
(74) Vertreter: Fechner, Thomas

(57) **Zusammenfassung**

Verbundwerkstoff (1) für die Herstellung einer Lebensmittelverpackung (2), welche ein Becher und/oder ein Becherdeckel ist, wobei der Verbundwerkstoff (1) eine Matrix (3) aus zumindest einem thermoplastischen Polymer und in der Matrix (3) verteilt angeordnete Füllstoffpartikel (4) aus Nahrungsmittelproduktionsabfällen aufweist, wobei in einer Häufigkeitsverteilung betrachtet, zumindest 95% der Füllstoffpartikel (4) eine Korngröße kleiner 300 µm und zumindest 50% der Füllstoffpartikel (4) eine Korngröße kleiner 100 µm aufweisen.

## Beschreibung

Die vorliegende Erfindung betrifft einen Verbundwerkstoff für die Herstellung einer Lebensmittelverpackung, welche ein Becher und/oder ein Becherdeckel ist, wobei der Verbundwerkstoff eine Matrix aus zumindest einem thermoplastischen Polymer und in der Matrix verteilt angeordnete Füllstoffpartikel aus Nahrungsmittelproduktionsabfällen aufweist. Darüber hinaus betrifft die Erfindung auch eine Lebensmittelverpackung, welche ein Becher und/oder ein Becherdeckel ist, mit zumindest einer Schicht aus einem solchen Verbundwerkstoff sowie ein Verfahren zur Herstellung eines solchen Verbundwerkstoffs und Verfahren zur Herstellung einer Lebensmittelverpackung, welche ein Becher und/oder ein Becherdeckel ist.

Aus der US 3,499,851 ist es bekannt, gemahlenen Kaffeesatz als Füllstoff für thermoplastische Polymere zu verwenden. Die US 3,499,851 empfiehlt, den Kaffeesatz so zu mahlen, dass er durch ein 100 Mesch Gitter passt. Die JP 2010-173169 offenbart das Herstellen von Formteilen im Spritzgussverfahren mit einem bioabbaubaren synthetischen Harz und Kaffeesatz als Füllstoff. Ähnliches offenbart die JP 08207046, wobei hier allerdings Polypropylen zusammen mit dem Kaffeesatz verwendet wird. Die WO 2012/069721 A1 offenbart die Herstellung von Alltagsartikeln wie Tellern, Verpackungen und dergleichen aus bioabbaubarem thermoplastischem Polymer mit Kaffeesatz als Füllstoff.

Versuche haben allerdings gezeigt, dass die beim Stand der Technik bekannte Technologie bei dem Versuch der Herstellung sehr dünnwandiger Lebensmittelverpackungen nur zu unzufriedenstellende Ergebnisse liefert. Die so hergestellten Produkte sind zu porös bzw. löchrig, sodass sie nicht als dünnwandige Lebensmittelverpackung eingesetzt werden konnten.

Aufgabe der Erfindung ist es, einen Verbundwerkstoff der oben genannten Art zu Verfügung zu stellen, welcher sich auch für die Herstellung sehr dünnwandiger Lebensmittelverpackungen eignet.

Hierzu schlägt die Erfindung einen Verbundwerkstoff vor, welcher dadurch gekennzeichnet ist, dass , in einer Häufigkeitsverteilung betrachtet, zumindest 95% der Füllstoffpartikel eine Korngröße kleiner 300 µm und zumindest 50% der Füllstoffpartikel eine Korngröße kleiner 100 µm aufweisen.

Ein Grundgedanke der Erfindung ist somit, dass die Füllstoffpartikel aus den Nahrungsmittelproduktionsabfällen eine sehr geringe Korngröße haben müssen, um damit dünnwandige Lebensmittelverpackungen in Form von Bechern und/oder Becherdeckeln herstellen zu können. In der genannten Häufigkeitsverteilung betrachtet, müssen zumindest 95% der insgesamt vorhandenen Füllstoffpartikel eine Korngröße kleiner 300 µm haben. Zumindest 50% der insgesamt vorhandenen Füllstoffpartikel müssen eine Korngröße kleiner 100 µm aufweisen. In anderen Worten sollte also für die Häufigkeitsverteilung der Korngröße der Füllstoffpartikel Folgendes gelten: D 95: < 300 µm und D 50: < 100 µm. Nur wenn dies gegeben ist, lassen die verteilt in der Matrix angeordneten Füllstoffpartikel die Herstellung von entsprechend dünnwandigen Lebensmittelverpackungen der genannten Art zu.

Bei den Lebensmittelverpackungen handelt es sich um Becher, Becherdeckel oder Becher und Becherdeckel. Es kann sich dabei z.B. um Joghurtbecher handeln. Besonders bevorzugt handelt es sich bei den Bechern um Getränkebecher und/oder deren Becherdeckel, besonders bevorzugt um Kaffeebecher und/oder deren Becherdeckel. Die Dünnwandigkeit ist besonders bei Einwegbechern, also Bechern für den einmaligen Gebrauch vorteilhaft, wie sie z.B. bei Getränkeautomaten und insbesondere Kaffeeautomaten zum Einsatz kommen. Aus dem erfindungsgemäßen Verbundwerkstoff können die Becher oder auch die Becherdeckel oder entsprechend jeweils ein Set aus Becher und Becherdeckel hergestellt werden.

Die Matrix aus thermoplastischem Polymer ist das Material in das die Füllstoffpartikel aus Nahrungsmittelproduktionsabfällen, vorzugsweise fein, verteilt eingelagert sind. Bei den Nahrungsmittelproduktionsabfällen handelt es sich generell gesprochen um Abfälle aus der Nahrungsmittelproduktion, also in der Regel um Biomasse. Besonders bevorzugt handelt es sich bei den Füllstoffpartikeln aus Nahrungsmittelproduktionsabfällen um Kaffeesatz und/oder Weizenkleie, wobei diese Füllstoffpartikel grundsätzlich auch andere oder zusätzliche Materialien mit umfassen oder aufweisen können. Bevorzugt ist jedenfalls vorgesehen, dass die Füllstoffpartikel aus Nahrungsmittelproduktionsabfällen aus Kaffeesatz und/oder aus Weizenkleie bestehen oder Kaffeesatz und/oder Weizenkleie zumindest aufweisen.

Bei dem thermoplastischen Polymer, welches die Matrix des Verbundwerkstoffs bildet, kann es sich um künstliche Polymere, in der Regel auf Kohlenwasserstoffbasis, aber auch um bioabbaubare thermoplastische Polymere handeln. Bevorzugt ist vorgesehen, dass das thermoplastische Polymer ein Polyolefin, vorzugsweise ein Polypropylen (PP) oder ein Polyethylen (PE), oder ein, vorzugsweise schlagzähes (HIPS) und/oder glasklares (GPPS) und/oder expandiertes und/oder geschäumtes (EPS), Polystyrol (PS) oder ein Polylactid (PLA) oder ein Polybutylensuccinat (PBS) oder ein Polyhydroxyalkanoat (PHA) oder ein Styrolbutadiencopolymer (SBC) oder ein Styrolbutadienstyrol (SBS) ist oder zumindest aufweist. Der Anteil der Füllstoffpartikel am Verbundwerkstoff beträgt in bevorzugten Varianten von 10 Gew% bis 60 Gew%, vorzugsweise von 20 Gew% bis 30 Gew%. Der Verbundwerkstoff kann zusätzlich zum thermoplastischen Polymer und den Füllstoffpartikeln auch noch andere an sich bekannte Additive aufweisen, ohne dass dies nachfolgend genauer erläutert werden muss.

Wie eingangs bereits erläutert, betrifft die Erfindung neben dem Verbundwerkstoff auch die Lebensmittelverpackung an sich, welche ein Becher und/oder ein Becherdeckel sein kann. Diese weist zumindest eine Schicht aus einem erfindungsgemäßen Verbundwerkstoff auf, wobei die Schicht aus dem Verbundwerkstoff eine Schichtdicke im Bereich von 0,1mm bis 1,0mm, vorzugsweise von 0,1mm bis 0,6mm, aufweist. In anderen Worten handelt es sich um eine sehr dünnwandige Lebensmittelverpackung, welche zumindest eine Schicht aus dem erfindungsgemäßen Verbundwerkstoff aufweist. Die Schicht aus dem Verbundwerkstoff alleine oder verbunden mit anderen Schichten ist bevorzugt eine sich selbst tragende und/oder in sich formstabile Wand, vorzugsweise Außenwand, der Lebensmittelverpackung. Beim Endprodukt der Lebensmittelverpackung in Form eines Bechers und/oder eines Becherdeckels handelt es sich also nicht um eine Art Folie sondern um ein Produkt mit selbstragenden Wänden. Diese können zwar elastisch oder plastisch verformbar sein, haben in sich aber eine Steifigkeit, die ihre Form zumindest in der bei der Verwendung vorgesehenen Normalbelastung im gewünschten Umfang erhält. Bei der Wand der Lebensmittelverpackung kann es sich um einen mehrschichtigen Aufbau handeln. Z.B. ist denkbar, dass die Schicht aus dem erfindungsgemäßen Verbundwerkstoff in dieser Wand eine mittlere Schicht bildet. Auf deren Innenseite kann eine Innenschicht zum direkten Kontakt mit einem Lebensmittel aus einem nicht recycelten Neumaterial, z.B. eben aus einem reinen thermoplastischen Polymer bestehen. Auf der Außenseite der Mittelschicht aus Verbundwerkstoff kann eine Farbschicht oder ein sonstiges Dekor aufgebracht sein. Die Farbpigmente können natürlich aber auch direkt in die Mittelschicht aus erfindungsgemäßem Verbundwerkstoff eingebracht sein. Um die Automatengängigkeit, also insbesondere ein Abstapeln der erfindungsgemäßen Becher und/oder Becherdeckel im Automat zu gewährleisten, kann als Außenschicht außen noch ein Antistatikum in an sich bekannter Art und Weise aufgebracht sein.

Es kann sich bei der erfindungsgemäßen Lebensmittelverpackung aber auch um eine solche handeln, bei der die Wand der Lebensmittelverpackung ausschließlich aus einer einzigen Schicht aus erfindungsgemäßem Verbundwerkstoff besteht.

Ein erfindungsgemäßes Verfahren zur Herstellung eines erfindungsgemäßen Verbundwerkstoffs sieht vor, dass ein Granulat, bestehend aus dem thermoplastischen Polymer, und eine Mischung aus einer Flüssigkeit, vorzugsweise Wasser, und den Füllstoffpartikeln aus Nahrungsmittelproduktionsabfällen mit einem Anteil der Füllstoffpartikel an der Mischung von 10 Masse% bis 60 Masse%, vorzugsweise 15 Masse% bis 30 Masse%, in ein Extruderrohr eingebracht und im Extruderrohr unter Einwirkung zumindest einer Extruderschnecke, vorzugsweise zweier ineinandergreifender Extruderschnecken, miteinander vermischt werden, wobei durch Temperatureinwirkung das thermoplastische Polymer im Extruderrohr aufgeschmolzen wird und die Flüssigkeit zumindest teilweise im Extruderrohr verdampft wird und der dadurch entstehende Verbundwerkstoff über eine Austrittsdüse aus dem Extruderrohr, vorzugsweise als Strang, herausgedrückt wird.

Bei dem erfindungsgemäßen Verfahren kann vorgesehen sein, dass der Verbundwerkstoff das Extruderrohr über eine Austrittsdüse als Strang verlässt und dieser Strang dann über an sich beim Stand der Technik bekannte Zerkleinerungsverfahren in Granulat zerkleinert wird. Die weiter unten genannten Verfahren zur Herstellung einer Lebensmittelverpackung, welche ein Becher und/oder ein Becherdeckel ist, können aber auch so unmittelbar an das Verfahren zur Herstellung des Verbundwerkstoffs anschließen, dass der das Extruderrohr durch die Austrittsdüse verlassende Verbundwerkstoff gleich weiter verarbeitet wird.

Während im oben genannten Stand der Technik davon ausgegangen wird, dass die Füllstoffpartikel aus Nahrungsmittelproduktionsabfällen möglichst trocken dem die Matrix bildenden thermoplastischen Polymer zugegeben werden müssen, um den Verbundwerkstoff herzustellen, geht die Erfindung genau den gegenteiligen Weg. Hier werden die Füllstoffpartikel aus Nahrungsmittelproduktionsabfällen dem thermoplastischen Polymer in Form einer Mischung aus Flüssigkeit, vorzugsweise Wasser, und den Füllstoffpartikeln oder in anderen Worten in Form einer Pulpe dem thermoplastischen Polymer hinzugefügt. Die Flüssigkeit wird dann zumindest teilweise im Extruderrohr verdampft. Bevorzugt ist dabei vorgesehen, dass die im Extruderrohr verdampfte Flüssigkeit als Dampf über zumindest eine zusätzlich zur Austrittsdüse, und vorzugsweise distanziert von der Austrittsdüse, im Extruderrohr angeordnete Dampfaustrittsöffnung aus dem Extruderrohr hinaus abgegeben wird. Die Dampfaustrittsöffnung kann dabei auf Atmosphärendruck gesetzt werden. Sie kann aber genauso gut mit Unterdruck bzw. Vakuum beaufschlagt werden, um den Dampf aus dem Extruderrohr zu saugen. Der Begriff Dampf ist allgemein als gasförmige Phase der Flüssigkeit zu verstehen, die Flüssigkeit muss ja nicht zwingend Wasser sein. Man kann den Dampf daher auch allgemein als Gas und die Dampfaustrittsöffnung auch als Entgasung bezeichnen. Den Vorgang des Verdampfens könnte man auch als Vergasen bzw. als Übertritt in die Gasphase bezeichnen. Überraschenderweise hat sich jedenfalls gezeigt, dass durch die Zugabe der Füllstoffpartikel aus Nahrungsmittelproduktionsabfällen in mit Flüssigkeit gemischter Form ein Verbundwerkstoff geschaffen werden kann, mit welchem besonders dünnwandige Lebensmittelverpackungen in Form von Bechern und/oder Becherdeckeln hergestellt werden können. Bei der Durchführung des erfindungsgemäßen Verfahrens gibt es verschiedene Möglichkeiten. So können das Granulat aus thermoplastischem Polymer und die Pulpe aus Füllstoffpartikeln aus Nahrungsmittelproduktionsabfällen und der Flüssigkeit, insbesondere dem Wasser, vor Einbringung in das Extruderrohr gemischt und als Mischung in das Extruderrohr eingebracht werden. Alternativ ist es auch möglich, das thermoplastische Polymer zunächst einzeln in das Extruderrohr einzubringen und dort aufzuschmelzen, um dann der Schmelze aus thermoplastischem Polymer die Mischung aus Flüssigkeit und Füllstoffpartikeln über zumindest eine entsprechende Düse im Extruderrohr zuzuführen. Eine dritte Variante ist es, zuerst die Mischung aus Flüssigkeit und Füllstoffpartikeln aus den Nahrungsmittelproduktionsabfällen in das Extruderrohr einzuführen und dann anschließend das Granulat aus dem thermoplastischen Polymer mittels einer an sich bekannten Seitenbeschickung in das Extruderrohr einzuführen. In allen Fällen werden dann letztendlich durch das Einwirken der zumindest einen Extruderschnecke im Extruderrohr die Füllstoffpartikel aus Nahrungsmittelproduktionsabfällen gleichmäßig der Matrix aus thermoplastischem Polymer untergemischt. Die Flüssigkeit, also vorzugsweise das Wasser, wird verdampft. Besonders bevorzugt ist vorgesehen, dass im Extruderrohr zwei, vorzugsweise gleichlaufende und/oder dichtkämmende, um ihre Längsachse rotierende Extruderschnecken vorgesehen sind. Es kann sich z.B. um einen gleichlaufenden dichtkämmenden Zweischneckenkneter, einen Mehrwellenextruder aber auch um einen Planetwalzenextruder handeln. Der Extruder kann modular aufgebaut sein, was sich besonders gut für die Entgasungsaufgabe, also das Verdampfen und Ableiten der Flüssigkeit nach Außen eignet. Das Extruderrohr kann somit mehrteilig aufgebaut sein und auch als Extrudergehäuse bezeichnet werden. Bei den Dampfaustrittsöffnungen kann es sich um einfache Öffnungen im Extruderrohr handeln. Es können aber auch spezielle, beim Stand der Technik an sich bekannte Entgasungsöffnungen im Extruderrohr verwendet werden.

Grundsätzlich ist es möglich, dass die Mischung aus Flüssigkeit und Füllstoffpartikeln aus den Nahrungsmittelproduktionsabfällen bereits im richtigen Mischungsverhältnis aus der Nahrungsmittelproduktion kommt. Ist dies nicht der Fall, so kann durch entsprechende Hinzugabe oder Verdampfen von Flüssigkeit zu den Füllstoffpartikeln oder aus der Pulpe heraus, ein entsprechendes Mischungsverhältnis im oben angegebenen Bereich eingestellt werden.

Zum Einstellen der gewünschten Korngrößenverteilung ist bevorzugt vorgesehen, dass die Füllstoffpartikel aus Nahrungsmittelproduktionsabfällen vor dem Einbringen in das Extruderrohr, vorzugsweise in einem mittels der Flüssigkeit verdünnten Zustand, so lange gemahlen werden, bis, in der Häufigkeitsverteilung betrachtet, zumindest 95% der Füllstoffpartikel eine Korngröße kleiner 300 µm und zumindest 50% der Füllstoffpartikel eine Korngröße kleiner 100 µm aufweisen. Zur Bereitstellung der entsprechenden Korngrößenverteilung bzw. zur Durchführung des hierfür notwendigen Mahlprozesses können an sich bekannte Refinerprozesse verwendet werden, wie man sie z.B. aus der Papierindustrie kennt.

Eine Variante eines erfindungsgemäßen Verfahrens zur Herstellung einer Lebensmittelverpackung, welche ein Becher und/oder ein Becherdeckel ist, sieht vor, dass der erfindungsgemäße Verbundwerkstoff in einem Spritzgussverfahren zur Lebensmittelverpackung verarbeitet wird. Das Spritzgussverfahren kann dabei, wie beim Stand der Technik an sich bekannt, durchgeführt werden, wobei der erfindungsgemäße Verbundwerkstoff, vorzugsweise in Form eines Granulates, bei diesem Spritzgießen als Ausgangsmaterial verwendet wird. Im Sinne der erfindungsgemäßen Dünnwandigkeit der Lebensmittelverpackung liegt beim Durchführen des Spritzgussverfahrens das Verhältnis von Fließweg zur Wanddicke günstigerweise im Bereich > 100:1, besonders bevorzugt im Bereich von 200:1 bis 400:1. Diese Art der Verfahren zur Herstellung erfindungsgemäßer Lebensmittelverpackungen sind besonders dann günstig, wenn die Lebensmittelverpackung einen einschichtigen Wandaufbau haben soll.

Ein alternatives Verfahren zur Herstellung einer Lebensmittelverpackung, welche ein Becher und/oder ein Becherdeckel ist, ist dadurch gekennzeichnet, dass der erfindungsgemäße Verbundwerkstoff in einem Extrusionsverfahren als eine einschichtige Folie oder als zumindest eine Schicht einer mehrschichtigen Folie extrudiert wird und anschließend die Lebensmittelverpackung in einem Formverfahren aus der Folie hergestellt wird. Geeignete Formverfahren sind an sich bekannt. Es kann sich z.B. um Tiefziehverfahren aber auch um Thermoformverfahren handeln. Die im Extrusionsverfahren hergestellte Folie kann einschichtig ausschließlich aus dem erfindungsgemäßen Verbundwerkstoff bestehen. Besonders bevorzugt ist diese Art der Herstellung der Lebensmittelverpackung aber dann, wenn ein mehrschichtiger Wandaufbau der Lebensmittelverpackung realisiert werden soll, bei dem der erfindungsgemäße Verbundwerkstoff neben anderen Schichten eine Schicht, vorzugsweise eine Mittelschicht, bildet. Es kann hierbei sowohl auf an sich bekannte Extrusionsverfahren als auch auf an sich bekannte Formverfahren zurückgegriffen werden, sodass dies nicht näher erläutert werden muss. Im Sinne der angestrebten Dünnwandigkeit der erfindungsgemäßen Lebensmittelverpackung ist günstigerweise ein Tiefziehverhältnis, also ein Verhältnis zwischen Foliendicke der Ausgangsfolie und Wandstärke des Endprodukts im Bereich von 2 bis 7, besonders bevorzugt im Bereich von 4 bis 5 vorgesehen. Das Verhältnis des Durchmessers des Öffnungsquerschnitts zur Tiefe liegt günstigerweise im Bereich von 0,5 bis 1,5, bevorzugt von 0,5 bis 0,8. Das Umformverhältnis in Form des Verhältnisses Höhe zu Breite bzw. Durchmesser liegt günstigerweise im Bereich von 0,7 bis 2, vorzugsweise von 1,3 bis 1,7.

Weitere Merkmale und Einzelheiten bevorzugter Ausgestaltungsformen der Erfindung werden nachfolgend in der Figurenbeschreibung beispielhaft erläutert. Es zeigen:
Fig. 1 schematisiert einen Verfahrensablauf;
Fig. 2 bis 4 verschiedene apparative Lösungen zur Durchführung des Verfahrens zur Herstellung des Verbundwerkstoffs;
Fig. 5 einen schematischen Schnitt durch ein Extruderrohr mit zwei Extruderschnecken;
Fig. 6 einen Schnitt durch eine Variante einer Dampfaustrittsöffnung im Extruderrohr;
Fig. 7 bis 11 Darstellungen zur Herstellung erfindungsgemäßer Lebensmittelverpackungen in Form von Bechern und/oder Becherdeckeln auf Basis der Extrusion von Folien und der anschließenden Umformung und
Fig. 12 bis 16 Darstellungen zur Herstellung erfindungsgemäßer Lebensmittelverpackungen im Spritzgussverfahren.

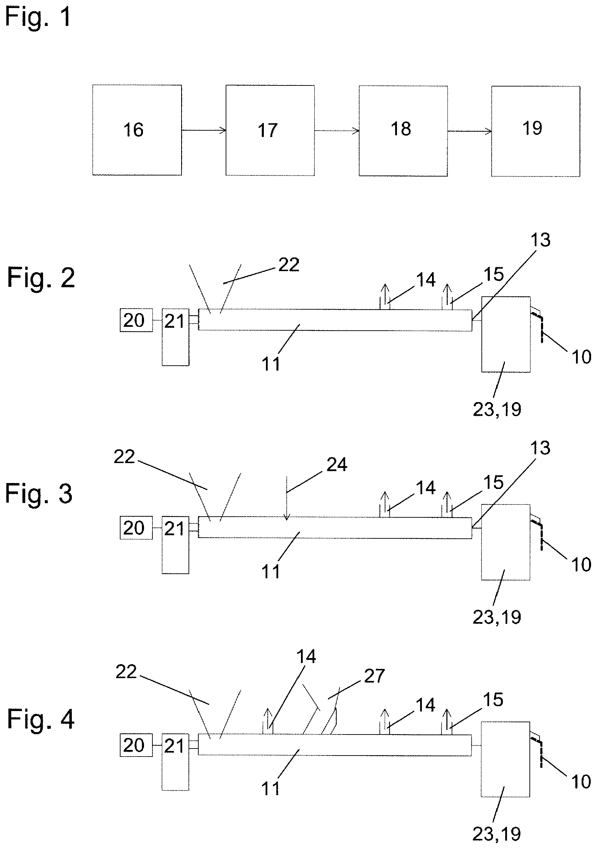

Der in Fig. 1 dargestellte Verfahrensablauf ist sehr allgemein und schematisiert gehalten. Beim ersten Verfahrensschritt 16 handelt es sich um einen an sich bekannten Vorgang bei der Lebensmittelproduktion, bei dem die Nahrungsmittelproduktionsabfälle, aus denen die Füllstoffpartikel 4 gewonnen werden, entstehen. Handelt es sich bei den Füllstoffpartikeln 4 um Kaffeesatz, so kann dies z.B. das Mahlen und Kochen von Kaffee in Kaffeeautomaten oder in großindustriellen Anlagen zur Herstellung von Instantkaffee sein. Handelt es sich bei den Füllstoffpartikeln 4 um Weizenkleie, so besteht der erste Verfahrensanschritt 16 in der Getreideverarbeitung und im Absieben des Mehles, wobei bei diesem Absieben die Weizenkleie, also die Samenschalen und Fruchtschalen des Weizens als Rückstand zurückbleiben.

Im zweiten Verfahrensschritt 17 erfolgt dann das Zerkleinern bzw. Mahlen der genannten Nahrungsmittelproduktionsabfälle auf die eingangs genannte erfindungsgemäße Korngröße. Dieser Zerkleinerungs- bzw. Mahlprozess wird günstigerweise, wie bereits eingangs erläutert, im feuchten Zustand, also mit einer Mischung aus den Füllstoffpartikeln 4 aus den Nahrungsproduktionsabfällen und einer Flüssigkeit, insbesondere Wasser, durchgeführt. Z.B. können hier die eingangs bereits genannten Refinerprozesse, welcher aus der Papierherstellung bekannt sind, zum Einsatz kommen, um die gewünschte Häufigkeitsverteilung der Korngrößen der Füllstoffpartikel 4 zu erreichen.

Im zweiten Verfahrensschritt 17 kann dann auch gleich das eingangs genannte bevorzugte Mischungsverhältnis der Mischung aus Flüssigkeit und Füllstoffpartikeln 4 eingestellt werden.

Anschließend kann dann im dritten Verfahrensschritt 18 der Verbundwerkstoff mit den eingangs erläuterten Verfahren hergestellt werden. Verschiedene Möglichkeiten solcher sogenannter Compoundierverfahren zur Herstellung des Verbundwerkstoffs sind in den Fig. 2 bis 4 dargestellt und werden nachfolgend erläutert.

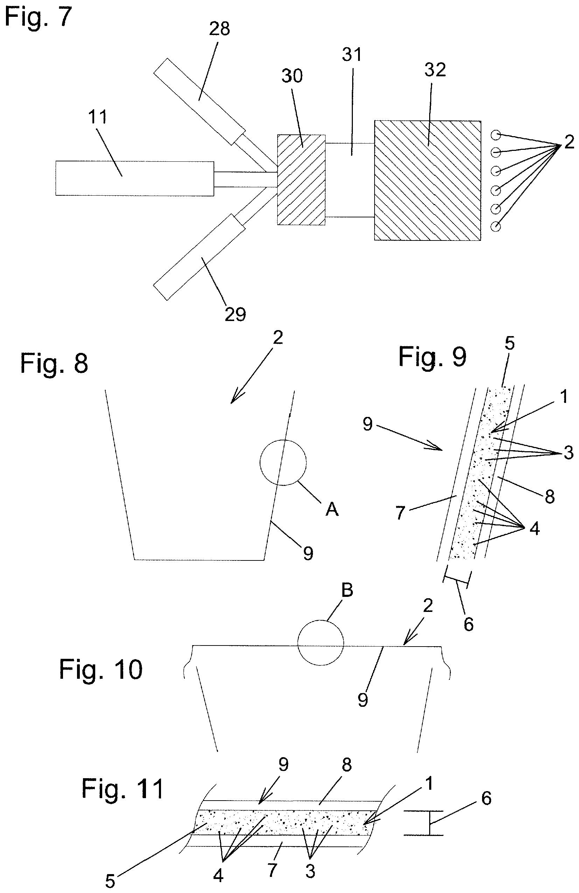

Im vierten Verfahrensschritt 14 wird dann unter Verwendung des hergestellten erfindungsgemäßen Verbundwerkstoffs 1 die Lebensmittelverpackung 2, welche ein Becher und/oder ein Becherdeckel ist, hergestellt. Verschiedene Möglichkeiten zur Durchführung dieses vierten Verfahrensschritts 19 werden anhand der Fig. 7 bis 11 und 12 bis 16 weiter unten beschrieben.

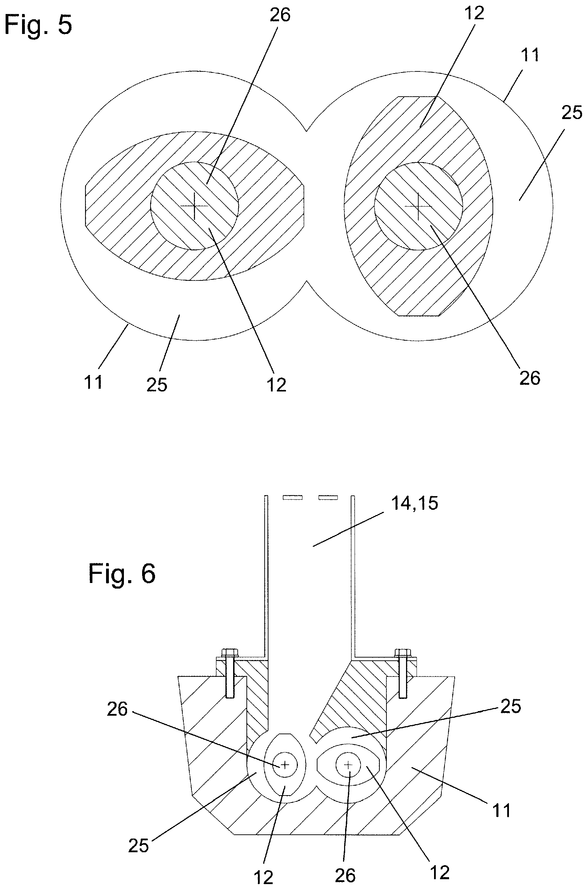

Fig. 2 zeigt schematisiert eine erste Extrudervorrichtung, mit der ein erfindungsgemäßes Verfahren zur Herstellung eines erfindungsgemäßen Verbundwerkstoffs 1 durchgeführt werden kann. Im Extruderrohr 11 befindet sich zumindest eine mittels des Rotors 20 und des Getriebes 21 um ihre Längsachse drehbar gelagerte Extruderschnecke 12. Bevorzugt handelt es sich, wie schematisiert in Fig. 5 in einem Querschnitt durch das Extruderrohr 11 dargestellt, um zwei Extruderschnecken 12, welche bevorzugt gleichlaufend und miteinander dicht kämmend im Extruderrohr 11 angeordnet sind. Im Schnitt gemäß Fig. 5 sieht man zusätzlich zu den Extruderschnecken 12 auch deren, in Längsrichtung des Extruderrohrs 11 verlaufende Schneckenwellen 26, mit denen die Extruderschnecken 12 gedreht werden. In den Aufnahmeräumen 25 befindet sich dann die Mischung aus Matrix 3, Füllstoffpartikel 4 und gegebenenfalls noch vorhandener Flüssigkeit bzw. daraus entstandenem Dampf.

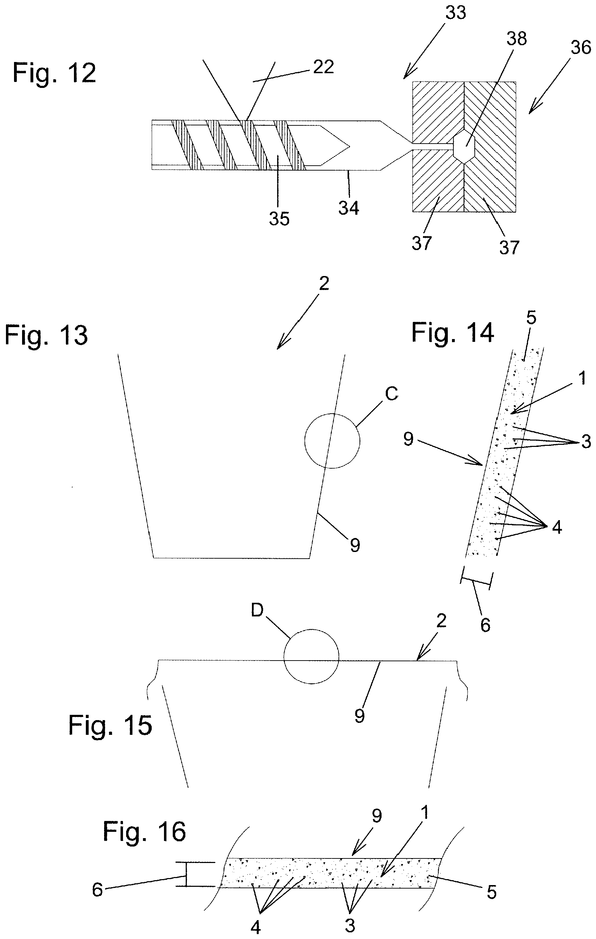

In dem ersten Ausführungsbeispiel gemäß Fig. 2 wird das Material der Matrix 3, also das thermoplastische Polymer, vorzugsweise in granularer Form, mit den Füllstoffpartikeln 4 aus den Nahrungsmittelproduktionsabfällen und dem entsprechenden Flüssigkeitsanteil, also insbesondere Wasser, vorab gemischt und über den Trichter 22 als fertige Mischung dem Extruderrohr 11 zugeführt. Im Extruderrohr 11 erfolgt dann mittels der Extruderschnecken 12 und an sich bekannter Heizungen am Extruderrohr 11 ein Aufschmelzen des thermoplastischen Polymers der Matrix 3, ein Mischen dieses Matrixmaterials mit den Füllstoffpartikeln 4 aus den Nahrungsmittelproduktionsabfällen und der Flüssigkeit, sowie ein Verdampfen der Flüssigkeit. Der dabei entstehende Dampf verlässt das Extruderrohr 11 über eine auf Atmosphäre liegende Dampfaustrittsöffnung 14 und/oder über eine Dampfaustrittsöffnung 15, an welche Unterdruck bzw. Vakuum angelegt wird. Es kann nur eine der Dampfaustrittsöffnungen 14 und 15 realisiert sein. Es kann aber auch eine Abfolge von mehreren Dampfaustrittsöffnungen 14 und 15 entlang des Extruderrohrs 11 angeordnet sein, wie dies in Fig. 2 beispielhaft gezeigt ist. Bei den Dampfaustrittsöffnungen 14 und 15 kann es sich um einfache Öffnungen im Extruderrohr handeln. Es können aber auch beim Stand der Technik an sich bekannte Dampfaustrittsöffnungen 14 bzw. 15 verwendet werden, wie sie in Fig. 6 in einem Querschnitt durch das Extruderrohr 11 gezeigt sind. Der fertig gemischte und aufgeschmolzene Verbundwerkstoff 1 wird dann durch die Austrittsdüse 13 des Extruderrohrs 11 aus dem Extruderrohr 11 z.B. in Form eines Stranges herausgedrückt. Dieser Strang kann dann mittels einer an sich bekannten Granulierung 23 aus Verbundwerkstoff 1 in ein Granulat 10 zerkleinert werden. Es ist aber genauso gut möglich, dass die Austrittsdüse 13 direkt in eine entsprechende Apparatur zur Durchführung des vierten Verfahrensschrittes 19 mündet, wie sie beispielhaft in den Fig. 7 und 12 dargestellt ist.

Fig. 3 zeigt eine Alternative einer Extrudervorrichtung zur Durchführung eines erfindungsgemäßen Verfahrens zur Herstellung eines erfindungsgemäßen Verbundwerkstoffs 1. Es wird im Folgenden nur noch auf die Unterschiede zu Fig. 2 eingegangen. Ansonsten gelten die Schilderungen zu Fig. 2. Der wesentliche Unterschied zwischen Fig. 2 und Fig. 3 und den entsprechenden Verfahren zur Herstellung des erfindungsgemäßen Verbundwerkstoffs 1 besteht darin, dass über den Trichter 22 zunächst nur ein entsprechendes Granulat des Materials der Matrix 3 aus thermoplastischem Polymer dem Extruderrohr 11 zugeführt wird. Durch die entsprechende Wärmeeinwirkung und Einwirkung der Extruderschnecken 12 im Extruderrohr 11 erfolgt dann ein Aufschmelzen des Materials der Matrix 3. Dem aufgeschmolzenen thermoplastischen Polymer wird dann über eine entsprechende Düse 24 die Mischung aus Flüssigkeit und den Füllstoffpartikeln 4 aus Nahrungsmittelproduktionsabfällen zugeführt. Der weitere Prozessvorgang des Vermischens der verschiedenen Materialien und des Verdampfens der Flüssigkeit im Extruderrohr 11 und der Abgabe des Dampfes aus den Dampfaustrittsöffnungen 14 und 15 erfolgt dann wie oben geschildert.

Eine weitere alternative Variante einer Extrudervorrichtung, mit der erfindungsgemäßer Verbundwerkstoff 1 hergestellt werden kann, ist in Fig. 4 gezeigt. Auch hier wird nur noch auf die Unterschiede zu den Varianten gemäß Fig. 2 und 3 eingegangen. Im Fall der Vorgehensweise mit einer Extrudervorrichtung gemäß Fig. 4 wird die Mischung aus Flüssigkeit und Füllstoffpartikeln 4 aus Nahrungsmittelproduktionsabfällen zunächst über den Trichter 22 in das Extruderrohr 11 eingefüllt. Es kommt dann zum Erwärmen und teilweisen Verdampfen der Flüssigkeit aus dieser Pulpe. Das Material der Matrix 3 aus thermoplastischem Polymer wird dann über eine an sich bekannte Seitenbeschickung 27 dem Extruderrohr 11 zugeführt. Der weitere Prozessvorgang im Extruderrohr 11 entspricht dann mit Aufschmelzen des thermoplastischen Polymers der Matrix 3, dem Vermischen der Materialien und dem Verdampfen der Flüssigkeit dem bereits geschilderten Verfahrensvorgang.

Fig. 7 zeigt nun einen schematischen Aufbau, mit dem ein Verfahren zur Herstellung einer Lebensmittelverpackung 2, welche ein Becher und/oder ein Becherdeckel ist, durchgeführt werden kann, bei dem vorgesehen ist, dass der erfindungsgemäße Verbundwerkstoff in einem Extrusionsverfahren, in diesem Beispiel als eine Schicht 5 einer mehrschichtigen Folie 31 extrudiert wird und anschließend die Lebensmittelverpackung 2 in einem Formverfahren, vorzugsweise in einem Tiefziehverfahren oder Thermoformverfahren, aus der Folie 31 hergestellt wird.

Schematisch dargestellt ist hier das Extruderrohr 11, in dem der erfindungsgemäße Verbundwerkstoff 1, wie beispielhaft anhand der Fig. 2, 3 und 4 dargestellt, hergestellt wird. Alternativ kann es sich auch um ein Standardextruderrohr 11 handeln, welchem Granulat 10 aus erfindungsgemäßem Verbundwerkstoff 1 zugeführt wird. In den Extrudern 28 und 29 wird das Material für die anderen Schichten 7 und 8 aufgeschmolzen. Wenn die Lebensmittelverpackung 2 ausschließlich aus einer Schicht aus erfindungsgemäßem Verbundwerkstoff 1 bestehen soll, können dann natürlich die zusätzlichen Extruder 28, 29 weggelassen werden. Die entsprechenden, über die Extruder 11, 28 und 29 erzeugten Schmelzen werden dann jedenfalls in an sich bekannter Art und Weise einer Flachfoliendüse 30 zugeführt, welche eine Folie 31 mit einer entsprechenden Anzahl von Schichten 5, 7 und 8 erzeugt. In einer an sich bekannten Formanlage 32, z.B. zur Durchführung an sich bekannter Tiefziehverfahren oder Thermoformverfahren, werden dann aus der Folie 31 die erfindungsgemäßen Lebensmittelverpackungen 2 in Form von Bechern oder Becherdeckeln hergestellt.

Fig. 8 zeigt einen Schnitt durch eine Lebensmittelverpackung 2 in Form eines Bechers in einer schematisierten Darstellung. Dieser Becher weist selbsttragende bzw. in sich formstabile Wände 9 auf. Der Bereich A ist in Fig. 9 vergrößert dargestellt. Es handelt sich um einen Längsschnitt durch die Wand 9 der Lebensmittelverpackung 2. Dabei ist gut zu erkennen, dass die Wand 9 einen insgesamt dreischichtigen Aufbau in diesem Ausführungsbeispiel hat. Die mittlere Schicht 5 besteht aus dem erfindungsgemäßen Verbundwerkstoff 1 mit den Füllstoffpartikeln 4 aus den Nahrungsmittelproduktionsabfällen, welche fein verteilt in der Matrix 3 aus thermoplastischem Polymer angeordnet sind. Die Schichtdicke 6 dieser Schicht 5 aus dem erfindungsgemäßen Verbundwerkstoff 1 liegt, wie eingangs bereits erläutert, günstigerweise im Bereich von 0,1mm bis 1,0mm, vorzugsweise im Bereich von 0,1mm bis 0,6mm. Diese Schichtdicke 6 macht günstigerweise 60-80% der Gesamtdicke der Wand 9 aus.

Zum Innenraum hin gewandt befindet sich die andere Schicht 7, welche auch als Innenschicht bezeichnet werden könnte. Mit dieser Innenschicht kommt das in dem Becher 2 eingefüllte Lebensmittel direkt in Kontakt. Es handelt sich bei der Innenschicht bzw. anderen Schicht 7 günstigerweise um Neumaterial, z.B. um reines Polystyrol, Polypropylen, Polyethylen, Polylactid, Polybutylensuccinat oder Polyhydroxyalkanoat. Die Dicke der Schicht 7 macht günstigerweise 10 bis 30% der Gesamtdicke der Wand 9 aus.

Auf der Außenseite befindet sich die andere Schicht 8. Es kann sich z.B. um ein Antistatikum oder eine Farbe handeln. Auch andere Schichten und Materialien aus thermplastischem Polymer sind denkbar. Soweit der gewünschte Dekoreffekt bereits durch den Füllstoff 4 in der Schicht 5 bereitgestellt wird, kann auf zusätzliche Farbschichten verzichtet werden. Die Dicke der Schicht 8 macht günstigerweise 10% der Gesamtdicke der Wand 9 aus.

Fig. 10 zeigt beispielhaft einen Schnitt durch eine Lebensmittelverpackung 2 in Form eines Becherdeckels, welche aus dem erfindungsgemäßen Verbundwerkstoff 1 mit dem anhand von Fig. 7 gezeigten Verfahren hergestellt worden ist. Der Bereich B der Wand 9 dieses Becherdeckels gemäß Fig. 10 ist in Fig. 11 vergrößert dargestellt. Die Beschreibung des Schichtaufbaus 11 entspricht den Schilderungen zu Fig. 9.

Fig. 12 zeigt schematisiert eine an sich bekannte Spritzgusseinrichtung, mit der ein Verfahren zur Herstellung einer erfindungsgemäßen Lebensmittelverpackung 2, welche ein Becher und/oder ein Becherdeckel ist, durchgeführt werden kann, wobei der erfindungsgemäße Verbundwerkstoff in einem Spritzgussverfahren zur Lebensmittelverpackung 2 verarbeitet wird. Hierzu kann das Granulat 10 aus erfindungsgemäßem Verbundwerkstoff 1, welches z.B., wie anhand der Fig. 2 bis 4 erläutert, hergestellt wurde, in den Trichter 22 der in Fig. 12 dargestellten Spritzgusseinrichtung eingefüllt werden. Im Extruderrohr 34 wird der erfindungsgemäße Verbundwerkstoff 1 aufgeschmolzen und von der Schnecke 35 der Spritzgussmaschine in die Spritzgussform 36 injiziert. Die Spritzgussform 36 ist in Fig. 12 schematisiert dargestellt. Sie weist, wie an sich bekannt, zwei Formhälften 37 auf, welche den Formhohlraum 38 umgeben. Das Spritzgießen ist an sich bekannt und muss nicht weiter erläutert werden.

In Fig. 13 ist schematisiert ein so hergestellter Becher in einem Vertikalschnitt dargestellt. Dessen Wand 9 besteht ausschließlich aus einer Schicht 5 aus erfindungsgemäßem Verbundwerkstoff 1. Ein Vertikalschnitt durch diese Wand 9 im Bereich C aus Fig. 13 ist vergrößert in Fig. 14 dargestellt. Auch hier sind die Füllstoffpartikel 4 aus Nahrungsproduktionsabfällen verteilt in der Matrix 3 aus thermoplastischem Polymer angeordnet. Fig. 15 zeigt eine entsprechend Fig. 12 hergestellte erfindungsgemäße Lebensmittelverpackung 2 in Form eines Becherdeckels. Dessen Wand 9 besteht ebenfalls nur aus einer Schicht 5 aus erfindungsgemäßem Verbundwerkstoff 1. Der Bereich D aus Fig. 15 und damit der entsprechende Schnitt durch die Wand 9 ist in Fig. 16 dargestellt. Für die Schichtdicke 6 gelten bevorzugt die eingangs genannten Werte.

### Legende

### zu den Hinweisziffern:

| | | | |
|---|---|---|---|
| 1 | Verbundwerkstoff | 29 | Extruder |
| 2 | Lebensmittelverpackung | 30 | Flachfoliendüse |
| 3 | Matrix | 31 | Folie |
| 4 | Füllstoffpartikel | 32 | Formanlage |
| 5 | Schicht | 33 | Spritzgussmaschine |
| 6 | Schichtdicke | 34 | Extruderrohr |
| 7 | andere Schicht | 35 | Schnecke |
| 8 | andere Schicht | 36 | Spritzgussform |
| 9 | Wand | 37 | Formhälften |
| 10 | Granulat | 38 | Formhohlraum |
| 11 | Extruderrohr | | |
| 12 | Extruderschnecke | | |
| 13 | Austrittsdüse | | |
| 14 | Dampfaustrittsöffnung | | |
| 15 | Dampfaustrittsöffnung | | |
| 16 | erster Verfahrensschritt | | |
| 17 | zweiter Verfahrensschritt | | |
| 18 | dritter Verfahrensschritt | | |
| 19 | vierter Verfahrensschritt | | |
| 20 | Motor | | |
| 21 | Getriebe | | |
| 22 | Trichter | | |
| 23 | Granulierung | | |
| 24 | Düse | | |
| 25 | Aufnahmeraum | | |
| 26 | Schneckenwelle | | |
| 27 | Seitenbeschickung | | |
| 28 | Extruder | | |

## Patentansprüche

1. Verbundwerkstoff (1) für die Herstellung einer Lebensmittelverpackung (2), welche ein Becher und/oder ein Becherdeckel ist, wobei der Verbundwerkstoff (1) eine Matrix (3) aus zumindest einem thermoplastischen Polymer und in der Matrix (3) verteilt angeordnete Füllstoffpartikel (4) aus Nahrungsmittelproduktionsabfällen aufweist, **dadurch gekennzeichnet, dass**, in einer Häufigkeitsverteilung betrachtet, zumindest 95% der Füllstoffpartikel (4) eine Korngröße kleiner 300 µm und zumindest 50% der Füllstoffpartikel (4) eine Korngröße kleiner 100 µm aufweisen.

2. Verbundwerkstoff (1) nach Anspruch 1, **dadurch gekennzeichnet, dass** das thermoplastische Polymer ein Polyolefin, vorzugsweise ein Polypropylen oder ein Polyethylen, oder ein, vorzugsweise schlagzähes und/oder glasklares und/oder expandiertes und/oder geschäumtes, Polystyrol oder ein Polylactid oder ein Polybutylensuccinat oder ein Polyhydroxyalkanoat oder ein Styrolbutadiencopolymer oder ein Styrolbutadienstyrol ist oder zumindest aufweist.

3. Verbundwerkstoff (1) nach Anspruch 1 oder 2, **dadurch gekennzeichnet, dass** die Füllstoffpartikel (4) aus Nahrungsmittelproduktionsabfällen aus Kaffeesatz und/oder aus Weizenkleie bestehen oder Kaffeesatz und/oder Weizenkleie zumindest aufweisen.

4. Lebensmittelverpackung (2), welche ein Becher und/oder ein Becherdeckel ist, mit zumindest einer Schicht (5) aus einem Verbundwerkstoff (1) nach einem der Ansprüche 1 bis 3, wobei die Schicht (5) aus dem Verbundwerkstoff (1) eine Schichtdicke (6) im Bereich von 0,1 mm bis 1,0 mm, vorzugsweise von 0,1 mm bis 0,6 mm, aufweist.

5. Lebensmittelverpackung (2) nach Anspruch 4, **dadurch gekennzeichnet, dass** die Schicht (5) aus dem Verbundwerkstoff (1) alleine oder verbunden mit anderen Schichten (7, 8) eine in sich selbst tragende und/oder in sich formstabile Wand (9), vorzugsweise Außenwand, der Lebensmittelverpackung (2) ausbildet.

6. Verfahren zur Herstellung eines Verbundwerkstoffs (1) nach einem der Ansprüche 1 bis 3, wobei ein Granulat bestehend aus dem thermoplastischen Polymer und eine Mischung aus einer Flüssigkeit, vorzugsweise Wasser, und den Füllstoffpartikeln (4) aus Nahrungsmittelproduktionsabfällen mit einem Anteil der Füllstoffpartikel (4) an der Mischung von 10 Masse% bis 60 Masse%, vorzugsweise 15 Masse% bis 30 Masse%, in ein Extruderrohr (11) eingebracht und im Extruderrohr (11) unter Einwirkung zumindest einer Extruderschnecke (12), vorzugsweise zweier ineinandergreifender Extruderschnecken (12), miteinander vermischt werden, wobei durch Temperatureinwirkung das thermoplastische Polymer im Extruderrohr (11) aufgeschmolzen wird und die Flüssigkeit zumindest teilweise im Extruderrohr (11) verdampft wird und der dadurch entstehende Verbundwerkstoff (1) über eine Austrittsdüse (13) aus dem Extruderrohr (11), vorzugsweise als Strang, herausgedrückt wird.

7. Verfahren nach Anspruch 6, **dadurch gekennzeichnet, dass** die im Extruderrohr (11) verdampfte Flüssigkeit als Dampf über zumindest eine zusätzlich zur Austrittsdüse (13), und vorzugsweise distanziert von der Austrittsdüse (13), im Extruderrohr (11) angeordnete Dampfaustrittsöffnung (14, 15) aus dem Extruderrohr (11) hinaus abgegeben wird.

8. Verfahren nach Anspruch 6 oder 7, **dadurch gekennzeichnet, dass** die Füllstoffpartikel (4) aus Nahrungsmittelproduktionsabfällen vor dem Einbringen in das Extruderrohr (11), vorzugsweise in einem mittels der Flüssigkeit verdünnten Zustand, so lange gemahlen werden, bis, in der Häufigkeitsverteilung betrachtet, zumindest 95% der Füllstoffpartikel (4) eine Korngröße kleiner 300 µm und zumindest 50% der Füllstoffpartikel (4) eine Korngröße kleiner 100 µm aufweisen.

9. Verfahren zur Herstellung einer Lebensmittelverpackung (2), welche ein Becher und/oder ein Becherdeckel ist, **dadurch gekennzeichnet, dass** der Verbundwerkstoff (1) nach einem der Ansprüche 1 bis 3 in einem Spritzgussverfahren zur Lebensmittelverpackung (2) verarbeitet wird.

10. Verfahren zur Herstellung einer Lebensmittelverpackung (2), welche ein Becher und/oder ein Becherdeckel ist, **dadurch gekennzeichnet, dass** der Verbundwerkstoff (1) nach einem der Ansprüche 1 bis 3 in einem Extrusionsverfahren als eine einschichtige Folie (31)oder als zumindest eine Schicht (5) einer mehrschichtigen Folie (31) extrudiert wird und anschließend die Lebensmittelverpackung (2) in einem Formverfahren, vorzugsweise in einem Tiefziehverfahren oder Thermoformverfahren, aus der Folie (31) hergestellt wird.
